# NEW EUROPEAN PATENT SPECIFICATION

(11) **EP 3 101 301 B2**
(45) Date of publication and mention of the opposition decision: **06.03.2024**
(45) Mention of the grant of the patent: 19.09.2018
(21) Application number: 15170690.0
(22) Date of filing: 04.06.2015
(51) Int. Cl.: F16D 55/2265, F16D 65/00

(54) **GUIDE ASSEMBLY**
FÜHRUNGSANORDNUNG
ENSEMBLE DE GUIDE

(43) Date of publication of application: 07.12.2016
(60) Divisional application: 18184472.1
(73) Proprietor: Meritor Heavy Vehicle Braking Systems (UK) Limited, Cwmbran, Gwent NP44 3XU (GB)
(72) Inventor: Knoop, Dietmar, Cwmbran, Gwent NP44 3XU (GB)
(74) Representative: Foot, Paul Matthew James

(56) References cited:
- EP-A1- 0 035 946
- WO-A1-94/01693
- WO-A1-2014/071001
- FR-A1- 2 905 155
- US-A1- 2014 116 817
- US-B1- 8 051 958

## Description

### FIELD OF THE INVENTION

The present invention relates to a disc brake. In addition, the present invention relates to a guide assembly for a disc brake, and to a disc brake incorporating a guide assembly.

### BACKGROUND OF THE INVENTION

Disc brakes are commonly used for braking heavy vehicles such as trucks, buses and coaches.

Disc brakes conventionally comprise a brake carrier, a caliper and rotor. The brake carrier is arranged to carry brake pads on each side of the rotor. The caliper is slidably mounted on the brake carrier by two or more guide assemblies, such that when the disc brake is actuated, the caliper is able to slide with respect to the brake carrier. As the caliper slides inboard, the brake pads are urged onto the opposing faces of the rotor in a clamping action and a braking action is effected.

A guide assembly typically comprises a guide pin along which the caliper can slide and a bore disposed in the caliper for receiving the guide pin. Typically, each guide pin comprises a smooth outer sleeve along which the caliper slides and a bolt which extends through the sleeve and is screwed into a bore of the brake carrier to retain the sleeve.

This arrangement has been proven over many years of usage. However it has been recognised that in certain operating conditions, specifically when a vehicle undergoes a significant number of forward and reverse movements, there is a risk that the bolt of the disc brake may rotate and loosen.

Previous attempts to solve this problem have utilised lock patches to inhibit rotation of the bolt.

One example of such prior art solutions is disclosed in document WO 94/01693 A1.

However, the present inventors have recognised that this approach in effect deals with a symptom of the problem rather than the cause. The present inventors have also identified that the cause of the loosening bolt problem is the rotation of the sleeve and the rotation of the sleeve being frictionally transmitted into rotation of the bolt.

The present invention seeks to overcome or at least mitigate the problems of the prior art.

### SUMMARY OF THE INVENTION

The invention is based on the idea that by rotationally engaging the sleeve and brake carrier, the rotational fixing is able to at least impede rotation of the sleeve relative to the disc brake. Thus, the rotational fixing is able to at least restrict undesirable rotation of a sleeve caused by a changing torque as a vehicle moves repeatedly forwardly and backwardly. The transmission of rotation from the sleeve to the bolt and consequential loosening of the bolt is also restricted.

For the purposes of this present invention, a "non-circular cross-sectional profile" should be understood as meaning that the respective circumference of the sleeve portion and the receiving portion is not a complete circle. The corresponding non-circular cross-sectional profiles of the sleeve portion and the receiving portion may for example comprise a circular region and/or a linear region, may have a regular and non-circular shape, may have angular shape or a non-uniform shape.

The invention concerns a guide assembly for a disc brake comprising:
a guide pin comprising a sleeve with a sleeve portion;
a receiving portion of a brake carrier to receive the sleeve portion;
wherein the sleeve portion and receiving portion have corresponding non-circular cross-sectional profiles such that, when the sleeve portion is received and aligned in the receiving portion, rotation of the sleeve relative to the brake carrier is thereby at least restricted.

The sleeve portion of the sleeve is a circumferential flange at a first end of the sleeve.

The receiving portion of the brake carrier may be a recess disposed in the brake carrier. Alternatively, the receiving portion may be a female member integrally formed or attached to the brake carrier. The receiving portion may be a male member protruding from the brake carrier and configured to receive at least a part of the sleeve portion.

The non-circular cross-sectional profile of the sleeve portion may be defined by an outer edge of the sleeve portion. The sleeve portion may comprise a circular outer edge region and a non-circular outer edge region. The circular outer edge region may be part of a circle (i.e. an arc). The non-circular outer edge region may be linear, substantially flat or angled, or a chord.

Likewise, the non-circular cross-sectional profile of the receiving portion may be defined by an inner edge of the receiving portion. The receiving portion may comprise a circular inner edge region corresponding to the circular outer edge region of the sleeve portion and a non-circular inner edge region corresponding to the non-circular outer edge region of the sleeve portion. The circular inner edge region may be part of a circle (i.e. an arc). The non-circular inner edge region may be linear, substantially flat or angled, or a chord.

The non-circular inner edge region of the receiving portion may be located at any angular orientation with respect to the brake carrier. Preferably, it is arranged in a low-stress region of the brake carrier. This, in turn, may be dependent on the orientation in which the brake carrier is installed with respect to the axle of the vehicle.

The receiving portion of the brake carrier may further comprise a first transition inner edge region at a first junction between the circular inner edge region and the non-circular inner edge region. The first transition inner edge may, for example, be a first curved corner extending between a first end of a linear inner edge region and a first end of a circular inner edge region of the receiving portion.

To counter rotational torque acting on the sleeve in a first rotational direction, the first transition inner edge region may be configured such that, when the sleeve portion is received and aligned in the receiving portion, the first transition inner edge region is able to abut the sleeve portion so as to restrict rotation of the sleeve portion in the first rotational direction. For example, the first transition inner edge region may be configured to abut the sleeve portion so as to at least restrict rotation of the sleeve portion in a clockwise direction.

The sleeve portion of the sleeve may further comprise a first chamfered outer edge region at a first junction between the circular outer edge region and the non-circular outer edge region. The first chamfered outer edge region enhances the surface contact area between the sleeve portion and the first transition inner edge region and this, as a consequence, helps to further impede the rotation of the sleeve portion in the first rotational direction.

The receiving portion of the brake carrier may comprise a second transition inner edge region at a second junction between the circular inner edge region and non-circular inner edge region. The second transition inner edge region may, for example, be a second curved corner extending from a second end of a linear inner edge region to a second end of a circular inner edge region.

To counter rotational torque acting on the sleeve in a second rotational direction (opposite to the first rotational direction), the second transition inner edge region may be configured such that, when the sleeve portion is received and aligned in the receiving portion, the second transition inner edge region is able to abut the sleeve portion so as to restrict rotation of the second rotational direction. For example, the second transition inner edge region may be configured to abut the sleeve portion and thereby at least restrict rotation of the sleeve portion in an anti-clockwise direction.

To enhance the abutment of the sleeve portion by the second transition region and thereby further impede the rotation of the sleeve portion in the second rotational direction, the sleeve portion may further comprise a second chamfered outer edge region at a second junction between the circular outer edge region and the non-circular outer edge region.

To mount the guide pin on the brake carrier, the guide pin may comprise a fastener and the guide assembly may further comprises a bore disposed in the brake carrier to receive the fastener. Preferably, the fastener is configured to extend through the sleeve and the bore is arranged in the receiving portion. The bore may be arranged centrally or eccentrically in the receiving portion. The fastener may be a bolt, for example a threaded bolt and the bore disposed in the brake carrier may have a complimentary threaded bore.

The corresponding non-circular cross-sectional profiles of the sleeve portion of the sleeve and the receiving portion of the brake carrier not only help to restrict rotation of the sleeve but also advantageously help to minimise operator error when installing or servicing the disc brake. For example, if the operator fails to correctly align the corresponding non-circular regions of the sleeve portion and the receiving portion, but nevertheless tightens the fastener, the guide pin will not extend normal to the brake carrier as required. Thus, the operator will not be able to assemble the caliper because the guide pin will be out of alignment to the complimentary bore of the caliper.

A further aspect of the invention provides a disc brake comprising a brake carrier, a caliper and at least one guide assembly according to the first aspect of the invention for slidably mounting the caliper with respect to the brake carrier.

Embodiments of the invention will now be described with reference to the accompanying drawings, in which:
Figure 1 is an isometric view showing a disc brake according to the present invention with a preferred embodiment of the guide assembly;
Figure 2 is an enlarged isometric cross-sectional view showing the preferred embodiment of the guide assembly;
Figures 3a, 3b and 3c are different views showing the sleeve of the preferred guide assembly;
Figure 4 is a front view of the brake carrier showing the recess of the preferred guide assembly;
Figure 5a to 5g is a series of views showing how a circular cutting tool moves in a circular path to cut the first circular inner edge region of the recess of the preferred guide assembly;
Figure 6a and 6b is a front view of the brake carrier and an enlarged view showing the recess of the preferred guide assembly;
Figure 7 is an exploded perspective view of the preferred guide assembly showing the guide pin and the brake carrier;
Figure 8 is a top view of the preferred guide assembly showing the guide pin mounted on the brake carrier;
Figures 9a and 9c are schematic views showing the corresponding cross- sectional profiles of the sleeve portion and receiving portion for alternative embodiments of the guide assembly, not within the scope of the claims; and
Figure 9b is a schematic view showing the corresponding cross- sectional profiles of the sleeve portion and receiving portion for an alternative embodiment of the guide assembly;
Figures 9d to 9g are schematic views showing interconnections for alternative embodiments of the guide assembly, not within the scope of the claims.

### DETAILED DESCRIPTION OF EMBODIMENT(S)

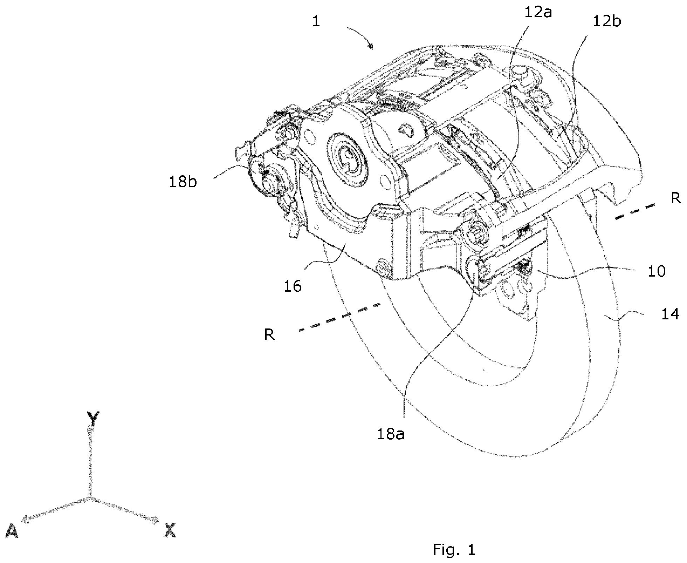

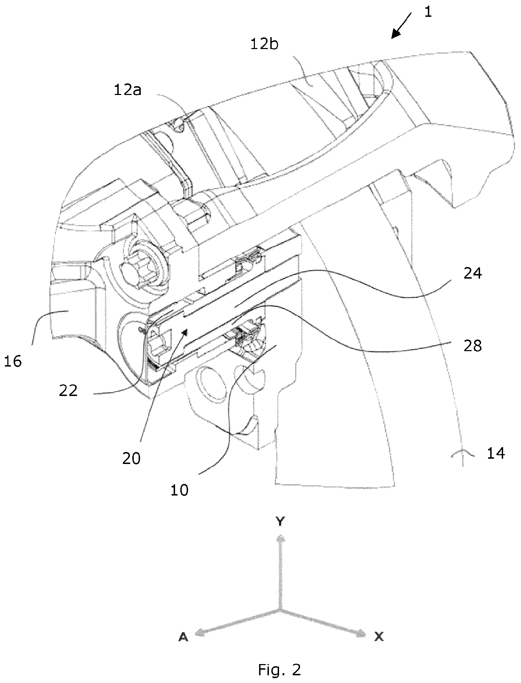

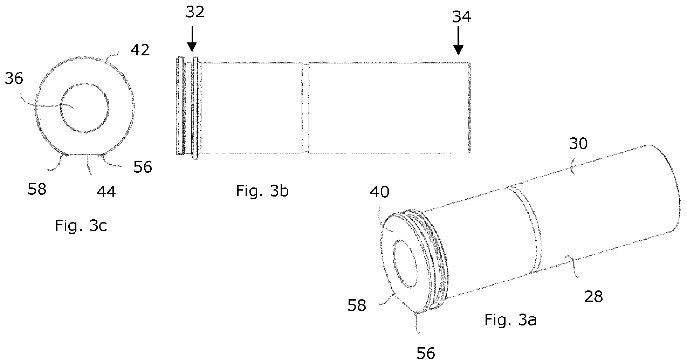

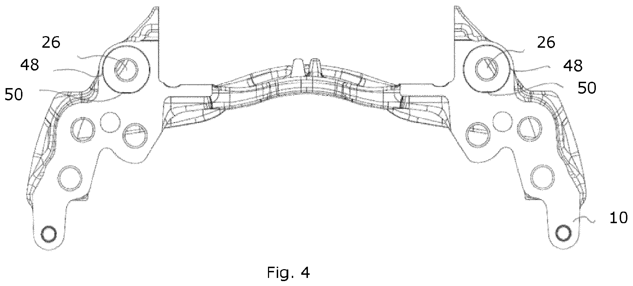

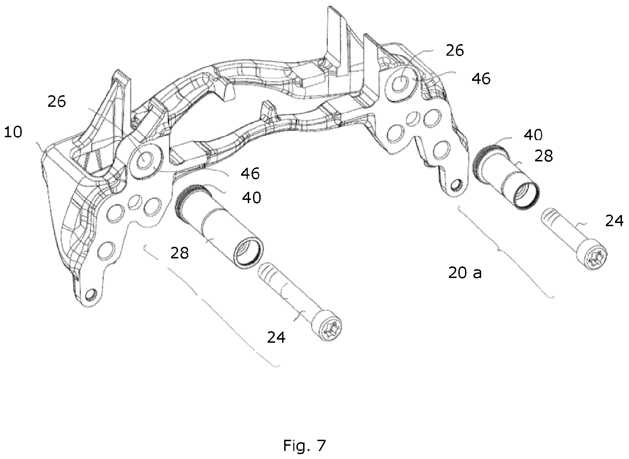

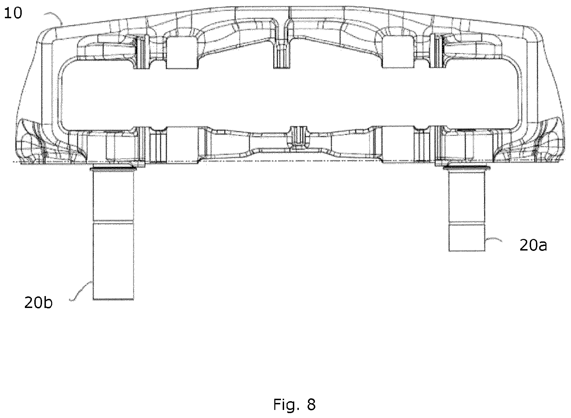

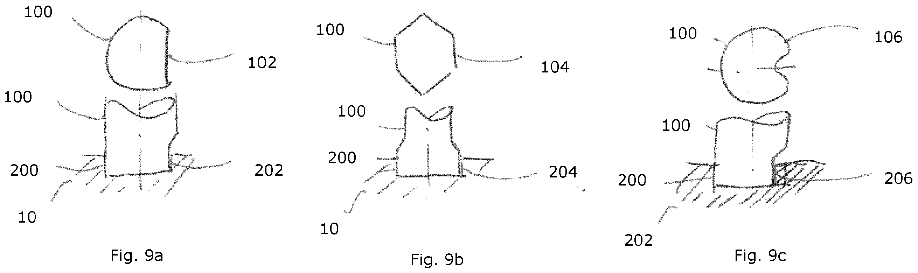

Referring to Figures 1 to 9g, a disc brake is indicated generally at 1. The disc brake comprises a brake carrier 10. The brake carrier carries an inboard brake pad 12a and an outboard brake pad 12b. A rotor 14 (shown in part) is positioned between the brake pads and is rotatable about an axis R. A caliper 16 is slidably mounted with respect to the brake carrier by at least one guide assembly 18. In the embodiment depicted, the disc brake comprises two guide assemblies 18a, 18b. Each of the two guide assemblies is a guide assembly according to the preferred embodiment of the invention.

Each guide assembly comprises a guide pin 20 along which the caliper 16 can slide and a bore 22 disposed in the caliper for receiving the guide pin. In the embodiment depicted, one of the guide pins 20a is shorter than the other guide pin 20b in order to accommodate vehicle installation constraints.

The guide pin 20 comprises a fastener 24 to attach the guide pin to the brake carrier 10. The fastener is received by a complimentary bore 26 disposed in the brake carrier.

The guide pin 20 further comprises a sleeve 28 at least substantially surrounding the fastener 24 and over which the caliper 16 slides. The sleeve is a hollow, thin walled tube. The outer surface of the sleeve may be coated with PTFE or any other suitable material to aid the sliding action of the caliper along the guide pin. The sleeve comprises a main body 30, a first end 32, a second end 34 and a bore hole 36 extending from the first end to the second end to receive the fastener.

The bore 22 disposed in the caliper to receive the guide pin is an elongate hole extending from a first side (inboard) to the second side (outboard) of the caliper 16.

During use, the guide pin 20 will be subject to dynamic loads. To counter rotational torque, the guide assembly of the present invention further comprises a rotational fixing to rotationally engage the sleeve 28 and the brake carrier 10 and thereby at least restrict rotation of the sleeve about its longitudinal axis. By rotationally engaging the sleeve and the brake carrier, the rotational fixing helpfully minimises or avoids undesirable rotation of the sleeve.

By restricting the rotation of the sleeve relative to the brake carrier, the transmission of rotation from the sleeve to the fastener is also restricted. Thus, the subsequent risk of loosening the fastener from the brake carrier is advantageously reduced.

A rotational fixing for the disc brake may comprise a sleeve portion of the sleeve and a receiving portion of the brake carrier for receiving the sleeve portion. The sleeve portion comprises a circumferential flange of the sleeve. The receiving portion may comprise a recess disposed in the brake carrier, a female member integrally formed or attached to the brake carrier or a male member protruding from the brake carrier.

The sleeve portion and the receiving portion may comprise corresponding non-circular cross-sectional profiles. As a consequence, the sleeve portion and receiving portion have a must-fit arrangement. The sleeve portion must be correctly aligned relative to the receiving portion for it to fit into the brake receiving portion. When the sleeve portion is located in the receiving portion, rotation of the sleeve relative to the brake carrier is restricted.

In the preferred embodiment of the guide assembly as shown in Figures 1 to 8, the sleeve portion of the rotational fixing is a circumferential flange 40 arranged at the first end of the guide sleeve. The cross-sectional profile of the flange is defined by an outer edge of the flange. In this embodiment, the flange has a non-circular cross-sectional profile comprising two profile regions. The profile of the flange has a first circular outer edge region 42 and a second flat outer edge region 44.

The desired cross-sectional profile of the flange may, for example, be manufactured by removing a segment of a circular flange of a conventional sleeve. The flange may be manufactured using any conventional cutting, milling or machining techniques, using for example a CNC lathe or CNC milling machine. A cutting tool may be moved in a linear path to cut away the segment of the circular flange so as to form a flange with a first circular outer edge region and the second flat outer edge region. By way of example, a circular flange with a diameter of approximately 39.95mm may be cut along a chord to remove a segment with a depth of approximately 1.75mm such that the resulting flange has a first circular outer edge region with a radius of approximately 19.97mm and a second flat outer edge region with a radius of approximately 18.25mm

In the preferred embodiment of the guide assembly, the receiving portion of the rotational fixing is a recess 46 disposed in the brake carrier to receive the flange of the guide sleeve. The cross-sectional profile of the recess is defined by an inner edge of the recess. The inner edge has a corresponding non-circular cross-sectional profile to the flange. The non-circular cross-sectional profile of the recess comprises a first circular inner edge region 48 and a second flat inner edge region 50.

The flat inner edge region 50 of the recess may be located at any angular orientation with respect to the brake carrier. The flat inner edge region is preferably arranged in a low-stress region of the brake carrier. The orientation of the flat inner edge region may be determined by the orientation of the brake carrier with respect to the axle of the vehicle. In the preferred embodiment depicted in Figures 1 to 8, the flat inner edge region is arranged at a 6 o clock orientation to the brake carrier.

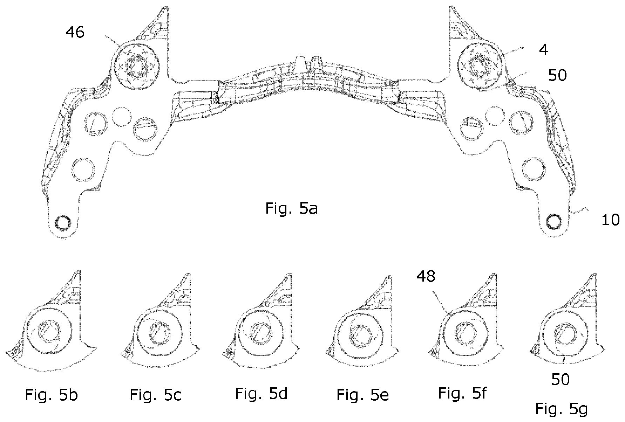

The recess may be manufactured with the desired cross-sectional profile using any conventional cutting, milling or machining techniques, using for example a CNC lathe or CNC milling machine. The recess may be cut in the brake carrier by moving a cutting tool in a circular path to define the circular inner edge region. Figures 5a to 5g show how a rotating cutting tool may be moved sequentially in a circular path to cut a recess with the circular inner edge region. The rotating cutting tool may also be moved along a linear path to cut the flat inner edge region. By way of example, the recess may be cut in the brake carrier using a circular cutting tool with a diameter of 25mm whereby the cutting tool may be moved along a circular path to cut a circular inner edge region with a radius of approximately 20mm and the cutting tool may be moved along a linear path to cut a flat linear edge region with a radius of approximately 18.95mm and a flat edge length of approximately 12.5mm.

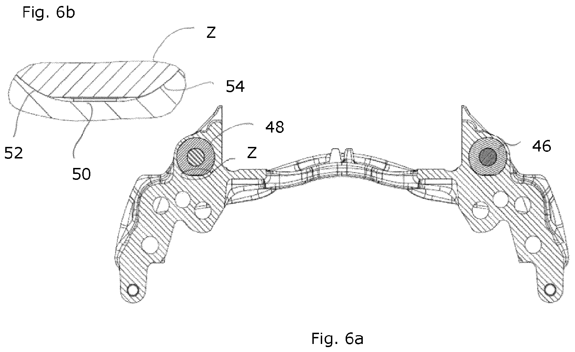

As the cutting tool moves from the circular path to the linear path and subsequently the linear path to the circular path, transition inner edge regions are formed between the circular inner edge region and the flat inner edge region. In the embodiment, the recess comprises a first transition inner edge region 52 at a first junction between the circular inner edge region and the flat inner edge region. As can be seen in Figure 6b, the first transition inner edge region 52 is a curved corner extending between the first end of the flat inner edge region and the first end of the circular inner edge region. The recess also comprises a second transition inner edge region 54 at a second junction between the circular inner edge region and the flat inner edge region. The second transition inner edge region 54 is a curved corner extending between the second end of the flat inner edge region and the second end of the circular inner edge region.

The dimensions and configuration of the sleeve portion and recess are selected such that, when the sleeve portion is received and aligned in the recess, the first transition inner edge region 52 is able to abut the sleeve portion and thereby at least restrict the rotation of the sleeve portion in a first rotational direction - for example, the clockwise direction. The first transition inner edge region 52 preferably mates and abuts the sleeve portion at a first junction 56 between circular outer edge region 42 and the flat outer edge region 44.

Likewise, the second transition inner edge region 54 is able to abut the sleeve portion and thereby at least restrict the rotation of the sleeve portion in a second rotational direction - for example, the anti-clockwise direction. The second transition inner edge region 54 preferably mates and abuts the sleeve portion at a second junction 58 between the circular outer edge region 42 and the flat outer edge region 44.

The abutting action of the sleeve relative to the brake carrier depends on the tolerances, configuration and dimensions of the sleeve portion and recess. By way of example, the guide assembly may be configured to provide an abutting action that is able to restrict the rotation of the sleeve relative to the brake carrier to up to a maximum of approximately 10 degrees. The guide assembly may alternatively be configured to provide an abutting action that is able to restrict rotation to up to a maximum of approximately 5 degrees, to up to a maximum of approximately 3 degrees or up to a maximum of approximately 1 degree.

To enhance the mating contact between the sleeve portion and the transition regions of the receiving portion, the flange may be chamfered at the junctions between the circular outer edge region and flat outer edge region. The sleeve portion may comprise a first chamfered outer edge region (not shown) at the first junction between the circular outer edge region and the flat outer edge region and a second chamfered outer edge region at the second junction between the circular outer edge region and the flat outer edge region. The first chamfered outer edge region improves the surface contact area between the flange and the first transition inner edge region. The second chamfered outer edge region improves the surface contact area between the flange and the second transition inner edge region. By increasing the surface contact area, the abutting effect of the transition edge regions is improved and the rotation of the sleeve is further restricted.

In the preferred embodiment of the guide assembly as shown in Figures 1 to 8, the fastener 24 for attaching the guide pin to the brake carrier is a threaded bolt and the bore 26 for receiving the fastener in the brake carrier is a threaded bore. The bore 26 is located in the recess 46 for receiving the sleeve portion. The bore may be centrally located or eccentrically located in the recess. The bore may be manufactured by any conventional drilling techniques.

To mount the guide pin on the brake carrier and rotationally engage the sleeve and the brake carrier, the bolt 24 is extended through the bore hole 22 of the sleeve, the flange 40 of the sleeve is located in the recess 46 with the profile regions aligned so as to form a rotational engagement between the sleeve and the brake carrier, and the bolt is screwed into the bore 26 in the brake carrier.

When attached to the brake carrier 10, the guide pin 20 extends in an axial direction A. Direction A is parallel to an axis R of rotation of the rotor 30 and parallel to the transverse axis of the disc brake. The caliper will be mounted on the guide pin by locating the guide pin in the caliper bore 22 and sliding the caliperalong the guide pin sleeve.

When fully assembled, the disc brake as depicted in Figure 1 can be actuated. An air actuator (not shown) is provided to move the inboard brake pad 12a into frictional contact with the rotor. When the inboard brake pad 12a is pushed towards and contacts the rotor, the caliper slides inboard along the guide pin. As the caliper slides inboard, it moves the outboard brake pad 12b towards the rotor. Hence, the rotor becomes clamped between the inboard and outboard brake pads and the rotation of the rotor is frictionally inhibited.

However, due to the corresponding non-circular cross-sectional profiles of the flange and recess, the disc brake can only be assembled or serviced if the profile regions of the flange and recess are properly aligned when first locating the flange in the recess. If the flange and recess are not properly aligned, the guide pin will not extend in the correct direction from the brake carrier. As a result, an operator will not be able to mount the caliper on the guide pin. Therefore, it is apparent that the flange and recess not only restrict undesirable rotation of the sleeve, they also usefully protect the disc brake from operator assembly error.

The sleeve portion and receiving portion of the rotation fixing may comprise any suitable corresponding non-circular cross-sectional profiles to at least restrict the rotation of the sleeve relative to the brake carrier. The corresponding non-circular cross-sectional profiles may comprise at least one circular region and/or at least one linear region, may have a regular and non-circular shape, may have an angular shape or a non-uniform shape.

In the alternative embodiment of the guide assembly, not within the scope of the claims, depicted in Figure 9a the sleeve portion 100 comprises a non-circular cross-sectional profile with a flat, linear edge 102. The receiving portion 200 is a recess disposed in the brake carrier with a corresponding non-circular cross-sectional profile with a flat, linear edge 202 to receive the sleeve portion. In the embodiment depicted in Figure 9b, the sleeve portion 100 comprises a hexagonal cross-sectional profile 104. The receiving portion 200 is a recess disposed in the brake carrier with a corresponding hexagonal cross-sectional profile 204. In the embodiment depicted in Figure 9c, not within the scope of the claims, the sleeve portion 100 comprises a free-form cross-sectional profile 106. The receiving potion 200 is a recess disposed in the brake carrier with a corresponding free-form cross-sectional profile 206.

The rotational fixing means may additionally or alternatively comprise an interconnection to interlock the sleeve and brake carrier so as to restrict rotation of the sleeve relative to the brake carrier. The interconnection may be locatable between a sleeve portion and receiving portion of a brake carrier.

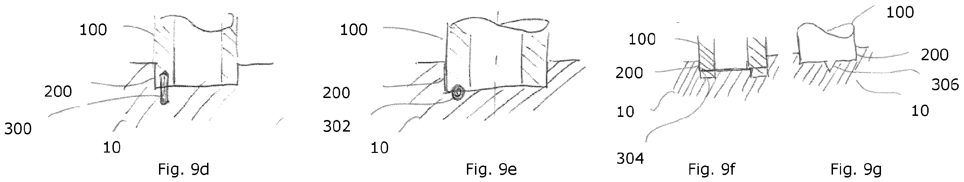

The interconnection may comprise any suitable interconnection for rotationally engaging the sleeve and brake carrier. The interconnection may comprise a pin 300, for example as depicted in Figure 9d, not within the scope of the claims. The sleeve portion 100 is received in the receiving portion 200. The pin 300 extends in axial direction A and the opposing ends of the pin are received in recesses formed in the sleeve portion and brake carrier 10. The interconnection may comprise a ball 302, for example as depicted in Figure 9e, not within the scope of the claims. The sleeve portion 100 is received in the receiving portion 200. Opposing sides of the ball are received in semicircular recesses formed in the sleeve portion and brake carrier 10. The interconnection may comprise a male protrusion and corresponding female indent. For example, as depicted in Figures 9f and 9g, not within the scope of the claims, the interconnection comprises one or more blades 304 or teeth 306 extending in axial direction A from the end of the sleeve portion 100 into corresponding indents in the brake carrier 10.

The rotational fixing means may comprise a deformable sleeve portion and a receiving portion for receiving the deformable sleeve portion. The deformable sleeve portion is configured to deform as it is located in the receiving portion so as to form an interference fit/press fit connection. Any rotation of the sleeve relative to the brake carrier is at least restricted due the interference fit/press fit connection.

The rotational fixing means may comprise a sleeve portion, a receiving portion to receive the sleeve portion and a friction enhancer to enhance the frictional engagement between the sleeve portion and receiving portion and thereby restrict rotation of the sleeve with respect to the brake carrier. The friction enhancer may comprise a knurled surface of the sleeve portion to enhance the frictional grip of the sleeve portion. The friction enhancer may comprise a splayed surface of the sleeve portion to help retain the sleeve portion in the receiving portion. The friction enhancer may comprise adhesive to bond the sleeve portion in the receiving portion. The friction enhancer may comprise a washer locatable between the sleeve portion and receiving portion. The washer may comprise a high friction washer and/or a toothed washer.

Although the invention has been described above with reference to one or more preferred embodiments, it will be appreciated that various changes or modifications may be made without departing from the scope of the invention as defined in the appended claims.

## Claims

1. A guide assembly for a disc brake (1) comprising:
a guide pin (20) comprising a sleeve (28) with a sleeve portion;
a receiving portion of a brake carrier (10) to receive the sleeve portion;
wherein the sleeve portion and receiving portion have corresponding non-circular cross-sectional profiles such that, when the sleeve portion is received and aligned in the receiving portion, rotation of the sleeve relative to the brake carrier is thereby at least restricted,
**characterised in that** the sleeve portion is a flange (40) arranged at a first end of the sleeve.

2. A guide assembly according to claim 1, wherein the non-circular cross-sectional profile of the sleeve portion is defined by an outer edge of the sleeve portion and the sleeve portion comprises:
a circular outer edge region (42); and
a non-circular outer edge region (44), preferably wherein the non-circular outer edge region is a linear outer edge region.

3. A guide assembly according to claim 2, wherein the non-circular cross-sectional profile of the receiving portion is defined by an inner edge of the receiving portion and the receiving portion comprises:
a circular inner edge region (48) corresponding to the circular outer edge region of the sleeve portion; and
a non-circular inner edge region (50) corresponding to the non-circular outer edge region of the sleeve portion, preferably wherein the non-circular inner edge region is a linear inner edge region.

4. A guide assembly according to claim 3, wherein the receiving portion further comprises a first transition inner edge region (52) at a first junction between the circular inner edge region and the non-circular inner edge region;
wherein, when the sleeve portion is received and aligned in the receiving portion, the first transition inner edge region is configured to abut the sleeve portion so as to restrict rotation of the sleeve portion in a first rotational direction.

5. A guide assembly according to claim 4, wherein the sleeve portion further comprises a first chamfered outer edge region at a first junction between the circular outer edge region and the non-circular outer edge region; and
wherein, when the sleeve portion is received and aligned in the receiving portion, the first transition inner edge region of the receiving portion is configured to abut the first chamfered outer edge region of the sleeve portion so as to restrict rotation in the first rotational direction.

6. A guide assembly according to claim 4 or 5, wherein the receiving portion further comprises a second transition inner edge region (54) at a second junction between the circular inner edge region and non-circular inner edge region;
wherein, when the sleeve portion is received and aligned in the receiving portion, the second transition inner edge region is configured to abut the sleeve portion so as to restrict rotation of a second rotational direction.

7. A guide assembly according to claim 6, wherein the sleeve portion further comprises a second chamfered outer edge region at a second junction between the circular outer edge region and the non-circular outer edge region;
wherein, when the sleeve portion is received and aligned in the receiving portion, the second transition inner edge region of the receiving portion is configured to abut the second chamfered outer edge region of the sleeve portion so as to restrict rotation in the second rotational direction.

8. A guide assembly according to any preceding claim wherein the receiving portion is a recess (46) disposed in the brake carrier.

9. A guide assembly according to any preceding claim, wherein:
the guide pin further comprises a fastener (24) to secure the guide pin to the brake carrier; and
the guide assembly further comprises a bore (26) disposed in the brake carrier to receive the fastener, the bore being arranged in the receiving portion.

10. A disc brake (1) comprising a brake carrier (10), a caliper (16) and at least one guide assembly according to any of claims 1 to 9 for slidably mounting the caliper with respect to the brake carrier.

## Patentansprüche

1. Führungsanordnung für eine Scheibenbremse (1), umfassend:
einen Führungsstift (20), umfassend eine Hülse (28) mit einem Hülsenabschnitt;
einen Aufnahmeabschnitt eines Bremsenträgers (10) zur Aufnahme des Hülsenabschnitts;
wobei der Hülsenabschnitt und der Aufnahmeabschnitt entsprechende nicht kreisförmige Querschnittsprofile aufweisen, sodass bei der Aufnahme und Ausrichtung des Hülsenabschnitts im Aufnahmeabschnitt die Drehung der Hülse relativ zum Bremsträger dadurch zumindest eingeschränkt wird,
**dadurch gekennzeichnet, dass** der Hülsenabschnitt ein Flansch (40) ist, der an einem ersten Ende der Hülse angeordnet ist.

2. Führungsanordnung nach Anspruch 1, wobei das nicht kreisförmige Querschnittsprofil des Hülsenabschnitts durch einen äußeren Rand des Hülsenabschnitts definiert ist und der Hülsenabschnitt Folgendes umfasst:
einen kreisförmigen äußeren Randbereich (42); und
einen nicht kreisförmigen äußeren Randbereich (44), wobei vorzugsweise der nicht kreisförmige äußere Randbereich ein linearer äußerer Randbereich ist.

3. Führungsanordnung nach Anspruch 2, wobei das nicht kreisförmige Querschnittsprofil des Aufnahmeabschnitts durch einen inneren Rand des Aufnahmeabschnitts definiert ist und der Aufnahmeabschnitt Folgendes umfasst:
einen kreisförmigen inneren Randbereich (48), der dem kreisförmigen äußeren Randbereich des Hülsenabschnitts entspricht; und
einen nicht kreisförmigen inneren Randbereich (50), der dem nicht kreisförmigen äußeren Randbereich des Hülsenabschnitts entspricht, wobei vorzugsweise der nicht kreisförmige innere Randbereich ein linearer innerer Randbereich ist.

4. Führungsanordnung nach Anspruch 3, wobei der Aufnahmeabschnitt ferner einen ersten Übergangsinnenrandbereich (52) an einer ersten Verbindung zwischen dem kreisförmigen Innenrandbereich und dem nicht-kreisförmigen Innenrandbereich umfasst;
wobei, wenn der Hülsenabschnitt im Aufnahmeabschnitt aufgenommen und ausgerichtet wird, der erste innere Übergangsrandbereich so ausgelegt ist, dass er an dem Hülsenabschnitt anliegt, um die Drehung des Hülsenabschnitts in einer ersten Drehrichtung zu beschränken.

5. Führungsanordnung nach Anspruch 4, wobei der Hülsenabschnitt ferner einen ersten abgeschrägten Außenrandbereich an einer ersten Verbindung zwischen dem kreisförmigen Außenrandbereich und dem nicht-kreisförmigen Außenrandbereich umfasst; und
wobei, wenn der Hülsenabschnitt im Aufnahmeabschnitt aufgenommen und ausgerichtet wird, der erste Übergangsinnenrandbereich des Aufnahmeabschnitts so ausgelegt ist, dass er an dem ersten abgeschrägten Außenrandbereich des Hülsenabschnitts anliegt, um die Drehung in der ersten Drehrichtung zu beschränken.

6. Führungsanordnung nach Anspruch 4 oder 5, wobei der Aufnahmeabschnitt ferner einen zweiten Übergangsinnenrandbereich (54) an einer zweiten Verbindung zwischen dem kreisförmigen Innenrandbereich und dem nicht-kreisförmigen Innenrandbereich umfasst;
wobei, wenn der Hülsenabschnitt im Aufnahmeabschnitt aufgenommen und ausgerichtet wird, der zweite innere Übergangsrandbereich so ausgelegt ist, dass er an dem Hülsenabschnitt anliegt, um die Drehung einer zweiten Drehrichtung zu beschränken.

7. Führungsanordnung nach Anspruch 6, wobei der Hülsenabschnitt ferner einen zweiten abgeschrägten Außenrandbereich an einer zweiten Verbindung zwischen dem kreisförmigen Außenrandbereich und dem nicht-kreisförmigen Außenrandbereich umfasst;
wobei, wenn der Hülsenabschnitt im Aufnahmeabschnitt aufgenommen und ausgerichtet wird, der zweite Übergangsinnenrandbereich des Aufnahmeabschnitts so ausgelegt ist, dass er an dem zweiten abgeschrägten Außenrandbereich des Hülsenabschnitts anliegt, um die Drehung in der zweiten Drehrichtung zu beschränken.

8. Führungsanordnung nach einem der vorhergehenden Ansprüche, wobei der Aufnahmeabschnitt eine Aussparung (46) ist, die im Bremsträger angeordnet ist.

9. Führungsanordnung nach einem der vorhergehenden Ansprüche, wobei:
der Führungsstift ferner ein Befestigungselement (24) umfasst, um den Führungsstift am Bremsträger zu befestigen; und
die Führungsanordnung ferner eine Bohrung (26) umfasst, die im Bremsträger zur Aufnahme des Befestigungsmittels angeordnet ist, wobei die Bohrung im Aufnahmeabschnitt angeordnet ist.

10. Scheibenbremse (1) umfassend einen Bremsträger (10), einen Bremssattel (16) und mindestens eine Führungsanordnung nach einem der Ansprüche 1 bis 9 zur gleitenden Befestigung des Bremssattels in Bezug auf den Bremsträger.

## Revendications

1. Ensemble de guide pour un frein à disque (1) comprenant :
une broche de guidage (20) comprenant un manchon (28) avec une partie de manchon ;
une partie de réception d'un support de frein (10) pour recevoir la partie de manchon ;
dans lequel la partie de manchon et la partie de réception ont des profils de section transversale non circulaire correspondants de telle sorte que, lorsque la partie de manchon est reçue et alignée dans la partie de réception, la rotation du manchon par rapport au support de frein est ainsi au moins limitée,
**caractérisé en ce que** la partie de manchon est une bride (40) disposée à une première extrémité du manchon.

2. Ensemble de guide selon la revendication 1, dans lequel le profil de section transversale non circulaire de la partie de manchon est défini par un bord extérieur de la partie de manchon et la partie de manchon comprend :
une région de bord extérieur circulaire (42) ; et
une région de bord extérieur non circulaire (44), de préférence la région de bord extérieur non circulaire étant une région de bord extérieur linéaire.

3. Ensemble de guide selon la revendication 2, dans lequel le profil de section transversale non circulaire de la partie de réception est défini par un bord intérieur de la partie de réception et la partie de réception comprend :
une région de bord intérieur circulaire (48) correspondant à la région de bord extérieur circulaire de la partie de manchon ; et
une région de bord intérieur non circulaire (50) correspondant à la région de bord extérieur non circulaire de la partie de manchon, dans lequel la région de bord intérieur non circulaire est de préférence une région de bord intérieur linéaire.

4. Ensemble de guide selon la revendication 3, dans lequel la partie de réception comprend en outre une première région de bord intérieur de transition (52) au niveau d'une première jonction entre la région de bord intérieur circulaire et la région de bord intérieur non circulaire ;
dans lequel, lorsque la partie de manchon est reçue et alignée dans la partie de réception, la première région de bord intérieur de transition est configurée pour venir en butée contre la partie de manchon de manière à limiter la rotation de la partie de manchon dans un premier sens de rotation.

5. Ensemble de guide selon la revendication 4, dans lequel la partie de manchon comprend en outre une première région de bord extérieur chanfreinée à une première jonction entre la région de bord extérieur circulaire et la région de bord extérieur non circulaire ; et
dans lequel, lorsque la partie de manchon est reçue et alignée dans la partie de réception, la première région de bord intérieur de transition de la partie de réception est configurée pour venir en butée contre la première région de bord extérieur chanfreinée de la partie de manchon de manière à limiter la rotation dans la première direction de rotation.

6. Ensemble de guide selon la revendication 4 ou 5, dans lequel la partie de réception comprend en outre une seconde région de bord intérieur de transition (54) à une seconde jonction entre la région de bord intérieur circulaire et la région de bord intérieur non circulaire ;
dans lequel, lorsque la partie de manchon est reçue et alignée dans la partie de réception, la seconde région de bord intérieur de transition est configurée pour venir en butée contre la partie de manchon de manière à limiter la rotation d'une seconde direction de rotation.

7. Ensemble de guide selon la revendication 6, dans lequel la partie de manchon comprend en outre une seconde région de bord extérieur chanfreinée à une seconde jonction entre la région de bord extérieur circulaire et la région de bord extérieur non circulaire ;
dans lequel, lorsque la partie de manchon est reçue et alignée dans la partie de réception, la seconde région de bord intérieur de transition de la partie de réception est configurée pour venir en butée contre la seconde région de bord extérieur chanfreinée de la partie de manchon de manière à limiter la rotation dans la seconde direction de rotation.

8. Ensemble de guide selon l'une quelconque des revendications précédentes, dans lequel la partie de réception est un évidement (46) disposé dans le support de frein.

9. Ensemble de guide selon l'une quelconque des revendications précédentes, dans lequel :
la broche de guidage comprend en outre une fixation (24) pour fixer la broche de guidage au support de frein ; et
l'ensemble de guide comprend en outre un alésage (26) disposé dans le support de frein pour recevoir la fixation, l'alésage étant disposé dans la partie de réception.

10. Frein à disque (1) comprenant un support de frein (10), un étrier (16) et au moins un ensemble de guide selon l'une quelconque des revendications 1 à 9 pour le montage coulissant de l'étrier par rapport au support de frein.
